# EUROPÄISCHE PATENTSCHRIFT

(11) **EP 1 708 433 B1**
(45) Veröffentlichungstag und Bekanntmachung des Hinweises auf die Patenterteilung: **20.01.2010**
(21) Anmeldenummer: 06006399.7
(22) Anmeldetag: 28.03.2006
(51) Int. Cl.: H04W 4/24, H04M 15/00

(54) **Verfahren und System zur Vergebührung von Anwendungen und/oder dem damit verbundenen Datenverkehr in einem Funk-Kommunikationssystem**
Method and system for billing of applications and/or the related data traffic in a radio communication system
Procédé et système pour la facturation des applications et/ou du correspondant trafic de données dans un système de radiocommunication

(30) Priorität: 30.03.2005 DE 102005014481
(43) Veröffentlichungstag der Anmeldung: 04.10.2006
(73) Patentinhaber: Vodafone Holding GmbH, 40213 Düsseldorf (DE)
(72) Erfinder: Purkop, Thomas, 50259 Pulheim (DE)
(74) Vertreter: Müller, Thomas

(56) Entgegenhaltungen:
- WO-A-2004/086790
- WO-A-2004/100466
- WO-A-2006/100183
- US-A1- 2004 042 410
- 3RD GENERATION PARTNERSHIP PROJECT: "Overall high level functionality and architecture impacts of flow based charging; stage 2 (Release 6)" 3RD GENERATION PARTNERSHIP PROJECT (3GPP); TECHNICAL SPECIFICATION (TS), XX, XX, Bd. 23.125, Nr. V6.2.0, 1. September 2004 (2004-09-01), Seiten 1-46, XP002427252
- 3RD GENERATION PARTNERSHIP PROJECT 3GPP: "3rd Generation Partnership Project; Technical Specification Group Services and System Aspects; Evolution of Policy Control and Charging (Release 7)" 20050324, 24. März 2005 (2005-03-24), Seiten 1-13, XP002389323
- "Digital cellular telecommunications system (Phase 2+); Universal Mobile Telecommunications System (UMTS); Policy control over Go interface (3GPP TS 29.207 version 5.3.0 Release 5); ETSI TS 129 207" ETSI STANDARDS, LIS, Bd. 3-CN3, Nr. V5.3.0, 1. März 2003 (2003-03-01), XP014009627 ISSN: 0000-0001

## Beschreibung

Die vorliegende Erfindung betrifft ein Verfahren zur Vergebührung von Anwendungen und/oder dem damit verbundenen Datenverkehr in einem Funk-Kommunikationssystem sowie ein System zur Vergebührung von Anwendungen und / oder dem damit verbundenen Datenverkehr.

Bei modernen Funk-Kommunikationssystemen kann ein mobiles Endgerät über ein Zugangsnetzwerk mit einem Kernnetzwerk verbunden werden. Hierbei kann das Zugangsnetz ein GPRS (General Packet Radio Service) oder ein UMTS-Netz sein. In dem Kernnetzwerk kann ein Dienstenetzwerk (z.B. ein IP-Multimedia-Subsystem (IMS)) integriert sein.

Bei diesen Mobilfunknetzen besteht die Möglichkeit eine unmittelbare Verbindung zwischen zwei oder mehr Endgeräten (Peer-to-Peer) herzustellen. So können beispielsweise Spiele oder andere Anwendungen, die auf einem mobilen Endgerät liegen ausgeführt werden, wobei lediglich der Datenverkehr, der für die Aktivierung und Ausführung der Anwendung notwendig ist, über das Kernnetzwerk übermittelt wird. Diese Peer-to-Peer-Anwendungen können über das Dienstenetzwerk des Kernnetzwerkes verwaltet werden (IMS Peer-to-Peer).

Im Falle einer IMS Peer-to-Peer-Anwendung erfordert der bisher geläufige Standard-Mechanismus einen Online-Vergebührungs-Zusammenhang (Online charging correlation), in Form von geeigneten Korrelationskennungen, um die Kosten des Zugriffs für IMS-Medienverkehr festzulegen. Echtzeit-Korrelations-Prozesse sind eine Belastung für die Vergebührungseinheit (Online Charging System (OOS)), das faktisch nicht so arbeiten kann, wie es erwartet wird und daher zu einer großen Latenzzeit bei der Herstellung einer IMS-Sitzung führt.

In dem Dokument 3rd Generation Partnership Project "Overall high level functionality and architecture impacts of flow based charging; stage 2 (Release 6)", Technical specification (TS 23.125), V 6.2.0 (2004-09) wird die Vergebührung von IMS Per-to-Peer-Medienströmen beschrieben. Hierbei wird eine Identifizierung der IMS-Anwendung zur Auswahl von Vergebührungsregeln in einer Charging Rule Function (CRF) verwendet. Die Informationen bezüglich der Anwendung können bei der Peer-to-Peer-Verbindung die IP-Adresse des Ziel-Endgerätes sein. Eine Berücksichtigung von weiteren Informationen betreffend die Anwendung, wie beispielsweise das verwendete Übertragungsmedium, erfolgt hierbei nicht.

Aufgabe der Erfindung ist es somit ein Verfahren und ein System zu schaffen, mit denen eine angemessene Vergebührung von IMS Peer-to-Peer-Anwendungen auf einfache Weise möglich wird und insbesondere eine Online-Korrelation in dem OCS nicht notwendig ist.

Die Aufgabe wird durch ein Verfahren mit den Merkmalen nach Anspruch 1 und ein System mit den Merkmalen nach Anspruch 8 gelöst. Vorteile und Merkmale, die bezüglich des Verfahrens beschrieben werden, gelten - soweit anwendbar - entsprechend für das erfindungsgemäße System und umgekehrt.

Gemäß einem ersten Aspekt wird die Erfindung gelöst durch ein Verfahren zur Vergebührung von Anwendungen und / oder dem damit verbundenen Datenverkehr in einem Funk-Kommunikationssystem, das zumindest ein Zugangsnetzwerk und Kernnetzwerk mit einem Dienstenetzwerk umfasst, wobei der Datenverkehr über ein dem Kernnetzwerk zugeordnetes Zugangsnetzwerk übertragen wird. Das Verfahren zeichnet sich dadurch aus, dass ein Zuordnungsschritt für die Zuordnung von Datenverkehr zu Gebührengruppen in Abhängigkeit der Anwendung, der der Datenverkehr zugeordnet ist, durchgeführt wird, wobei eine Kennzeichnung der Anwendung und/oder das Übertragungsmedium des Datenverkehrs als Teil eines Anfragesignals zum Aufbau einer Kommunikationsverbindung übermittelt wird und in dem Zuordnungsschritt ein Vergleich einer empfangenen Kennzeichnung der Anwendung und/oder eines empfangenen Übertragungsmediums des Datenverkehrs mit Einträgen einer Zuordnungstabelle durchgeführt wird, in der einer Kennzeichnung der Anwendung und einem Übertragungsmedium oder einer Übertragungsmedienkombination eine Gebührengruppe zugeordnet ist.

Das Dienstenetzwerk ist ein IMS. Das Zugangsnetzwerk kann ein GPRS-Netzwerk oder UMTS-Netzwerk darstellen. Die Gebührengruppen werden im Folgenden auch als Rating-Gruppen bezeichnet.

Hierdurch können Informationen generiert werden, die in weiteren Komponenten des Kernnetzwerks zur Vergebührung verwendet werden können. Eine Online-Korrelation in dem OCS kann daher entfallen.

Die Zuordnung bezüglich dieser Anwendung erfolgt in Abhängigkeit zumindest eines Kriteriums der Anwendung. Die Kriterien einer Anwendung können Auskunft über eine Anzahl von verkehrsrelevanten Informationen geben, so dass eine Zuordnung unter Berücksichtigung zumindest eines Kriteriums eine Verbesserung des Zuordnungsergebnisses und damit der Vergebührung liefert.

Eines der Kriterien der Anwendung, das der Zuordnung zugrunde gelegt wird, ist das Übertragungsmedium des Datenverkehrs. Diese Information erlaubt in der Regel bereits eine hinreichende Differenzierung unterschiedlicher Anwendungen und dem durch die Anwendung oder die Anwendungssitzung hervorgerufenen Datenverkehr. Hierbei können die in einer SDP-Nachricht, die bei Herstellung der Kommunikationsverbindung an das IMS, insbesondere über ein SIP-Signal übertragen wird, enthaltenen Informationen zum Vergleich mit Tabelleneinträgen verwendet werden. In der m-Zeile einer SDP ist in der der Regel neben der Adresszeile (Port-Number) und dem Format des Übertragungsprotokolls (udp, RTP/AVP) auch der Medientyp (audio, video usw.) angegeben. Hierbei ist insbesondere der Medientyp für die Zuordnung zu einer Gebührengruppe geeignet.

Weiterhin erfolgt die Zuordnung in Abhängigkeit einer Kennzeichnung der Anwendung, wobei diese besonders bevorzugt zumindest eine von dem für die Ausführung der Anwendung genutzten Übertragungsmedium unabhängige Information beinhaltet, die Auskunft über die Herkunft der Anwendung gibt.

Indem die Kennzeichnung Auskunft über die Herkunft der Anwendung gibt, kann zwischen Anwendungen, die von dem Netzwerkbetreiber oder einer dritten Partei, die eine Vereinbarung mit dem Netzwerkbetreiber geschlossen hat, stammen und Anwendungen, die von einer dritter Partei, die keine Vereinbarung mit dem Netzwerkbetreiber geschlossen hat, stammen, unterschieden werden. Die erstgenannte Variante wird im Folgenden auch als on-net bezeichnet und die zweite Variante als off-net. Als Herkunft der Anwendung wird im Sinne dieser Erfindung der Ort bezeichnet, von dem die Anwendung auf das mobile Endgerät übertragen wurde. Dies kann insbesondere ein Anwendungs-Download-Server sein, der einem Netzwerkbetreiber zugeordnet ist.

Die Kennzeichnung, die im Folgenden auch als Kennung oder ID bezeichnet wird, kann aus einer reinen alphanumerischen Zeichenfolge bestehen, die die Anmeldung identifiziert. Zusätzlich kann die Kennzeichnung eine Angabe über den Entwickler der Anwendung enthalten. Als Angabe über den Entwickler der Anwendung kann beispielsweise der FQDN (Fully Qualified Domain Name) des Entwicklers dienen.

Erfindungsgemäß wird die Kennzeichnung als Teil eines Anfragesignals zum Aufbau einer Kommunikationsverbindung übermittelt. Eine Peer-to-Peer-Anwendung, insbesondere eine IMS Peer-to-Peer-Anwendung, wird in der Regel durch Senden eines Anfragesignals, beziehungsweise einer Anfragenachricht an eine Dienstesteuerfunktion (AF (Application Funktion), beispielsweise CSCF (Call Session control function)) von dem mobilen Endgerät, das im Folgenden auch als UE (User Equipment) bezeichnet wird, initiiert. Diese Anfragenachricht kann in einem SIP
(Session-Initiating-Protocol)-Signal an die Dienstesteuerfunktion übermittelt werden. Indem eine erfindungsgemäße Kennzeichnung der Anwendung in einer solchen Anfragenachricht enthalten ist, kann dem Datenverkehr, der durch die Ausführung der Anwendung hervorgerufen wird, bereits bei deren Initialisierung eine geeignete Gebühr beziehungsweise Vergebührungsrichtlinie zugeordnet werden.

Als weiteres Kriterium kann die Verkehrskategorien des Datenverkehrs verwendet werden. Die Gebührengruppen können somit insbesondere unter Berücksichtigung der Übermittlungsrichtung des Datenverkehrs gewählt werden und der Datenverkehr der jeweiligen Gruppe zugeordnet werden. Für IMS-Peer-to-Peer-Anwendungen wird hierbei insbesondere die Angabe, ob die Anwendung an dem mobilen Endgerät des Kommunikationssystems terminiert (MT) oder von diesem stammt (MO) verwendet werden.

Erfindungsgemäß kann eine Rückfall-Gebührengruppe vorgesehen werden, der der Datenverkehr bei mangelnder Zuordnungsmöglichkeit aufgrund der gegebenen Kriterien zugeordnet wird. Auf diese Weise kann jede Anwendung und der damit verbundene Datenverkehr angemessenen Rating-Gruppen zugewiesen werden. Eine Ausnahmerichtlinie, in der das OCS die Ermittlung der zu erhebenden Gebühr nach einer Korrelations-Kennung für Anwendungen, die in dem Zuordnungsschritt keiner Klasse zugeordnet werden können, ausführen muss, ist nicht notwendig.

Erfindungsgemäß wird die Zuordnung anhand einer Zuordnungstabelle durchgeführt. Diese Tabelle kann durch den Netzwerkbetreiber konfiguriert werden. Hierbei können Kriterien hinzugefügt oder entfernt werden.

Die Zuordnungstabelle ist vorzugsweise in einer Richtlinienfunktion hinterlegt. Die Richtlinienfunktion kann beispielsweise die Vergebührungsrichtlinien-Funktion (Charging Rule Function (CRF)) darstellen.

Das Zuordnungsergebnis wird vorzugsweise an eine Komponente des Kernnetzwerkes übermittelt. Diese Komponente ist insbesondere ein Eingangsnetzknoten, wie beispielsweise der (Gateway GPRS Support Node (GGSN)). Die Rating-Gruppe vorzugsweise entsprechend der Verkehrskategorie kann im Rahmen der dynamischen Vergebührungsregeln an den GGSN übermittelt werden.

Gemäß einem weiteren Aspekt betrifft die Erfindung ein System zur Vergebührung von Anwendungen und / oder dem damit verbundenen Datenverkehr in einem Funk-Kommunikationssystem, das zumindest ein Zugangsnetzwerk und Kernnetzwerk mit einem Dienstenetzwerk umfasst, wobei der Datenverkehr über ein dem Kernnetzwerk zugeordnetes Zugangsnetzwerk übertragen wird. Das System zeichnet sich dadurch aus, dass eine, einer Komponente des Kernnetzwerkes zugeordnete, Einheit für die Verwaltung von Vergebührungsrichtlinien eine Vergleichseinheit umfasst, die anhand empfangener Informationen über die Anwendung einen Vergleich mit gespeicherten Informationen ausführt wobei die empfangenen Informationen eine empfangene Kennzeichnung der Anwendung und/oder ein empfangenes Übertragungsmedium des Datenverkehrs darstellt und die gespeicherten Informationen Einträge einer Zuordnungstabelle sind, in der einer Kennzeichnung der Anwendung und einem Übertragungsmedium des Datenverkehrs oder einer Übertragungsmedienkombination eine Gebührengruppe zugeordnet ist.

Die Komponente des Kernnetzwerkes, der die Vergebührungseinheit zugeordnet ist, ist insbesondere ein Eingangsnetzknoten, beispielsweise der GGSN. Die diesem zugeordnete Vergebührungseinheit kann insbesondere die CRF sein.

Weiterhin kann die Vergleichseinheit mit einer Komponente des Dienstenetzwerks (IMS) zur Übertragung der Informationen betreffend die Anwendung, verbunden sein. Die Komponente des Dienstenetzwerkes, das beispielsweise ein IMS darstellen kann, kann eine CSCF des Dienstenetzwerkes sein. An dieser werden beispielsweise SIP/SDP-Nachrichten empfangen, die die Informationen zur Durchführung des Vergleiches enthalten können.

Die Einheit für die Verwaltung von Vergebührungsrichtlinien, beispielsweise die CRF kann mit der Komponente, beispielsweise GGSN des Zugangsnetzwerkes zur Übermittlung eines Vergleichsergebnisses verbunden sein.

Die Erfindung wird im Folgenden erneut anhand der beiliegenden Zeichnung erläutert.

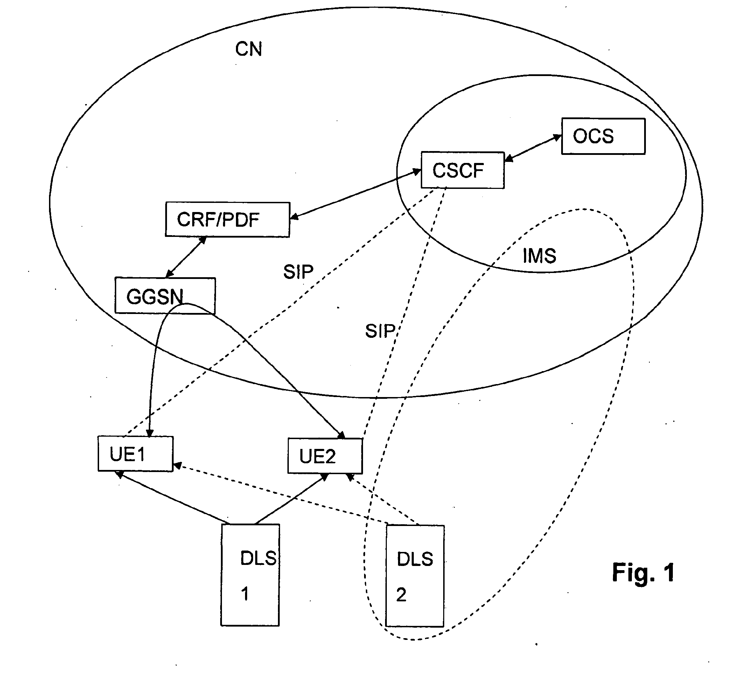

Figur 1 zeigt den schematischen Aufbau eines Kommunikationssystems für das erfindungsgemäße Verfahren.

Der grundsätzliche Aufbau von Kommunikationsnetzen der dritten Generation ist hinreichend bekannt, so dass in der Figur lediglich die für die Erfindung wesentlichen Komponenten dargestellt sind und deren Funktion nur bezüglich der Erfindung beschrieben werden.

Das Kommunikationssystem umfasst ein Kernnetzwerk, das in der dargestellten Ausführungsform, sowie ein IMS. Beim Aufbau einer Peer-to-Peer-Verbindung wird, wie in der Figur durch den durchgezogenen Pfeil dargestellt, eine Verbindung zwischen zwei mobilen Endgeräten UE1 und UE2 hergestellt. Diese kann durch eine SIP-Nachricht initiiert werden, die von einem der mobilen Endgeräte an das IMS gesandt wurde. Nachdem die Sitzung hergestellt wurde und die Anwendung zwischen den mobilen Endgeräten UE1 und UE2 ausgeführt wird, erfolgt der Datenverkehr über das Kernnetzwerk, insbesondere über die den Netzübergang-Netzknoten GGSN.

Die Anwendung für eine solche Sitzung kann von einem Download-Server DLS1, DLS2 herunter geladen werden. In der Figur sind zwei Download-Server (DLS1, DLS2) gezeigt, wobei einer DLS2 dem Netzwerk CN zugeordnet ist, wohingegen der andere DLS2 separat von dem Netzwerk CN ist. Der erste Fall kann beispielsweise den on-net-Fall repräsentieren, in dem die Anwendung von einem Portal, das von dem Netzwerkbetreiber des Kernnetzwerk CN unterhalten wird, herunter geladen wird. Die über dieses Portal herunter geladenen Anwendungen, werden entweder von dem Netzwerkbetreiber selber oder von einer Dritten Partei nach Absprache mit dem Netzwerkbetreiber zur Verfügung gestellt. Der zweite Fall repräsentiert die off-net-Konstellation, in der die Anwendung von einem Download-Server DLS 1 herunter geladen wird, die keine Vereinbarung mit dem Netzwerkbetreiber besitzt.

Das CRF implementiert eine so genannte Rating-Gruppen-Auswahltabelle, mit der gegebenenfalls auch die Möglichkeit geschaffen wird, zwischen einer MO (mobile originated) und MT (mobile terminated) Sitzungen zu unterscheiden. Die Rating-Gruppen-Auswahltabelle kann durch den Betreiber entsprechend der erforderlichen Parametern konfiguriert werden, die zur Klassifizierung des Dienstes/Sitzung notwendig sind. Mögliche Parameter sind hierbei eine Anwendungskennung, die insbesondere Informationen über die Herkunft der Anwendung gibt, Übertragungsmedien, Medienkombinationen und zugehörige Verkehrskategorien (Rating-Groups).

Hierzu können insbesondere die Einträge der m-Zeile einer SDP-Nachricht und jegliche zugehörigen Attribute, die den Dienst klassifizieren könnten, verwenden werden. So können beispielsweise das Nutzlast-Format (payload-format) und die Übertragungsrichtung konfiguriert werden.

Wenn die CRF eine SDP-Information, beispielsweise von dem IMS oder Streaming Server erhält, evaluiert diese die empfangenen Informationen gegen jede Reihe in der Rating-Gruppen-Tabelle, bis eine Übereinstimmung gefunden wurde. Wenn eine Anwendungs-Kennung für die Sitzung verfügbar ist, sollte dieser verwendet werden. Anderenfalls, sollten das Medium oder die Medien-Kombination (wenn mehr als ein Medium in dem SDP vorliegt) verwendet werden, um eine Übereinstimmung zu finden. Der Evaluierungs- beziehungsweise Zuordnungsprozess kann bei IMS/SIP-Diensten bei dem SDP Angebot/Antwort (offer/answer) Austausch oder bei Streaming-Diensten für die Sitzungs-Verhandlung durchgeführt werden.

Sobald eine Übereinstimmung für die Sitzung gefunden wurde, wird die Verkehrs-Kategorie, die den jeweiligen Medienkomponenten entspricht, verwendet, um eine dynamische Vergebührungsregel zu erzeugen. Insbesondere, wird der gesamte IP-Strom, der mit einer Medienkomponente assoziiert ist, mit der Rating-Gruppe, die aus dem Evaluierungsprozess resultiert, assoziiert.

Ein Beispiel der Rating-Gruppen-Auswahltabelle ist im Folgenden gezeigt. Diese Tabelle kann für das gesamte Netzwerk, oder für einzelne Nutzer auf einer per Teilnehmer-Basis (subscriber basis) gelten.

| Anwendungskennung Application Identifier | Medien Liste | Rating Gruppe | |
|---|---|---|---|
| | | MO | MT |
| Developer1.example.com AFBYU7891450J164 | Beliebig | 60 | |
| Developer1.example.com | m =application. *udp wb | 62 | 60 |
| FFGY0123498HH99 | m = message 9 msrp * | 50 | |
| Developer2.example.com KK234LLP9541P00 | m = application *tcp vf1 | 62 | |
| Beliebig | m =video 49170 RTP/AVP 34 | 60 | |
| | a = sendonly ∥ recvonly | | |
| Beliebig | m = audio 49180 RTP/AVP 97 | 60 | |
| | a = rtpmap:97 AMR/8000 | | |
| | a = sendonly ∥ recvonly | | |
| Beliebig | m = audio * RTP/AVP 97 | 65 | 50 |
| | a = rtpmap:97 AMR/8000 | | |
| | a = sendrecv | | |
| | m = video * RTP/AVP 34 | | |
| | a = sendrecv | | |
| Beliebig | Beliebig | 2 | |

In der obigen Tabelle zeigt der " * " in der m-Zeile an, das jede beliebige Port-Nummer zutrifft.
a = sendonly ∥ recvonly zeigt an, dass beide, die Richtung des alleinigen Sendens oder die Richtung des alleinigen Empfangens zutreffen. Hierbei kann eine Rating-Gruppe verwendet werden, die für alle Medien zutrifft oder jedem der Medien ist eine Rating-Gruppe zugeteilt (vergleiche Zeile 2 für die MO-Sitzung).

### Im Folgenden werden einige Beispiele aufgezeigt:

Eine empfangene SDP-Nachricht enthält eine Anwendungs-Kennung Developer1.example.com AFBYU7891450J164. Diese wird für die Bewertung gegenüber der Tabelle verwendet und stimmt mit der ersten Zeile überein. Die Medien-Liste-Spalte zeigt an, dass jede beliebige Medienkomponente, die in dem SDP angegeben ist, der Rating-Gruppe 60 zugeordnet werden soll.

Im nächsten Beispiel weist eine empfangene SDP-Nachricht eine unbekannte Anwendungs-Kennung auf. Diese wird für die Bewertung gegenüber der Tabelle verwendet, stimmt aber mit keiner der eingetragenen Anwendungs-Kennungen überein. Der Bewertungsprozess wird daher unter Berücksichtigung der Medienzusammensetzung fortgesetzt; es wird aber auch hierbei keine Übereinstimmung gefunden. Die letzte Zeile trifft zu, so dass alle Medienkomponenten in der SDP-Nachricht der Rating-Gruppe 2 zugeordnet werden. Somit wird eine SDP-Nachricht, die mit keinem Eintrag übereinstimmt immer als "off-net" behandelt.

Im nächsten Fall weist eine empfangene SDP-Nachricht keine Anwendungs-Kennung oder eine unbekannte Anwendungs-Kennung auf und besitzt die folgenden Medienkomponenten:
- m=: audio 32122 RTP/AVP 97
- a =: rtpmap:97 AMR/8000
- a =: fmtp:97 mode-set = 0,2,5,7; mode-change-period = 2;\ mode-change neighbour = 1
- a =: maxptime:20:
- a =: sendrecv
- m =: video 32124 RTP/AVP 34
- a =: sendrecv

In diesem Fall dient die Medien-Zusammensetzung dem Bewertungsprozess. Es werden vorzugsweise nur die relevantesten Attribute für die Klassifizierung von Diensten verwendet, um Übereinstimmungen in der Tabelle, das heißt der Medien-Liste-Spalte zu beurteilen. Die oben genannte Medienzusammensetzung stimmt mit der sechsten Zeile in der Tabelle für MO überein. Dementsprechend wird die Rating-Gruppe 65 allen Medienkomponenten zugeordnet.

Die Richtlinienfunktion, beispielsweise die CRF, sendet die Verkehrs-Kategorie beziehungsweise Rating-Gruppe für jeden IP-Strom, der mit einer Medienkomponente zusammenhängt, an einen Eingangsnetzknoten, insbesondere den GGSN als Teil der dynamischen Vergebührungsregel.

Die Erfindung kann insbesondere verwendet werden bei der CRF-Implementation, um die Plane Traffic Kategorie, die mit Medien-Strömen einer IMS Peer-to-Peer-Anwendung verbunden werden soll, festzulegen, um die angemessenen Zugriffsgebühren dem IMS Peer-to-Peer-Verkehr aufzuerlegen ohne den Aufwand der Online-Korrelation innerhalb des Online Charging Systems (OCS) zu erfordern.

Der Vorteil der vorliegenden Erfindung liegt weiterhin darin, dass eine Anwendungs-Kennung für IMS Peer-to-Peer-Anwendungen vergeben und berücksichtigt werden kann, so dass es möglich wird zwischen den gleichen Medien oder MedienKombinationen, die in Verbindung mit betreiberfreundlichen (On-net) Anwendungen versandt wurden, zu unterscheiden.

## Patentansprüche

1. Verfahren zur Vergebührung von IMS Peer-to-Peer Anwendungen und / oder dem damit verbundenen Datenverkehr in einem Funk-Kommunikationssystem, das zumindest ein Zugangsnetzwerk und Kernnetzwerk (CN) mit einem Dienstenetzwerk (IMS) umfasst, wobei der Datenverkehr über ein dem Kernnetzwerk (CN) zugeordnetes Zugangsnetzwerk übertragen wird, **dadurch gekennzeichnet, dass** ein Zuordnungsschritt für die Zuordnung von Datenverkehr zu Gebührengruppen in Abhängigkeit der Anwendung, der der Datenverkehr zugeordnet ist, durchgeführt wird, wobei eine Kennzeichnung der Anwendung und/oder das Übertragungsmedium des Datenverkehrs als Teil eines Anfragesignals zum Aufbau einer Kommunikationsverbindung übermittelt wird und in dem Zuordnungsschritt ein Vergleich einer empfangenen Kennzeichnung der Anwendung und/oder eines empfangenen Übertragungsmediums des Datenverkehrs mit Einträgen einer Zuordnungstabelle durchgeführt wird, in der einer Kennzeichnung der Anwendung und einem Übertragungsmedium oder einer Übertragungsmedienkombination eine Gebührengruppe zugeordnet ist.

2. Verfahren nach Anspruch 1, **dadurch gekennzeichnet, dass** die Kennzeichnung zumindest eine von dem für die Ausführung der Anwendung genutzten Übertragungsmedium unabhängige Information beinhaltet, die Auskunft über die Herkunft der Anwendung gibt.

3. Verfahren nach einem der Ansprüche 1 oder 2, **dadurch gekennzeichnet, dass** die Zuordnung unter Berücksichtigung der Übermittlungsrichtung des Datenverkehrs (MO/MT) erfolgt.

4. Verfahren nach einem der Ansprüche 1 bis 3, **dadurch gekennzeichnet, dass** bei mangelnder Zuordnungsmöglichkeit der Datenverkehr einer vorbestimmten Gebührengruppe zugeordnet wird.

5. Verfahren nach einem der Ansprüche 1 bis 4, **dadurch gekennzeichnet, dass** die Zuordnungstabelle in einer Einheit für die Verwaltung von Vergebührungsrichtlinien (CRF) hinterlegt ist.

6. Verfahren nach einem der Ansprüche 1 bis 5, **dadurch gekennzeichnet, dass** das Zuordnungsergebnis an eine Komponente des Kernnetzwerkes (GGSN) übermittelt wird.

7. Verfahren nach einem der Ansprüche 1 bis 6, **dadurch gekennzeichnet, dass** die Zuordnung unter Berücksichtigung der Verkehrskategorien erfolgt.

8. System zur Vergebührung von IMS Peer-to-Peer-Anwendungen und / oder dem damit verbundenen Datenverkehr in einem Funk-Kommunikationssystem, das zumindest ein Zugangsnetzwerk und Kernnetzwerk (CN) mit einem Dienstenetzwerk (IMS) umfasst, wobei der Datenverkehr über ein dem Kernnetzwerk (CN) zugeordnetes Zugangsnetzwerk übertragen wird, **dadurch gekennzeichnet, dass** eine, einer Komponente (GGSN) des Kernnetzwerk zugeordnete, Einheit für die Verwaltung von Vergebührungsrichtlinien (CRF) eine Vergleichseinheit umfasst, die anhand empfangener Informationen über die Anwendung einen Vergleich mit gespeicherten Informationen ausführt, wobei die empfangenen Informationen als Teil eines Anfragesignals zum Aufbau einer Kommunikationsverbindung übermittelt werden und eine empfangene Kennzeichnung der Anwendung und/oder ein empfangenes Übertragungsmedium des Datenverkehrs darstellen und die gespeicherten Informationen Einträge einer Zuordnungstabelle sind, in der einer Kennzeichnung der Anwendung und einem Übertragungsmedium des Datenverkehrs oder einer Übertragungsmedienkombination eine Gebührengruppe zugeordnet ist.

9. System nach Anspruch 8, **dadurch gekennzeichnet, dass** die Vergleichseinheit mit einer Komponente (CSCF) des Dienstenetzwerks (IMS) zur Übertragung der Informationen über die Anwendung, verbunden ist.

10. System nach einem der Ansprüche 8 oder 9, **dadurch gekennzeichnet, dass** die Einheit für die Verwaltung von Vergebührungsrichtlinien (CRF, OCS) mit der Komponente (GGSN) des Zugangsnetzwerkes zur Übermittlung eines Vergleichsergebnisses verbunden ist.

## Claims

1. Method for billing IMS peer-to-peer applications and/or the related data traffic in a radio communication system which encompasses at least one access network and core network (CN) with a service network (IMS), the data traffic being transmitted via an access network associated with the core network (CN), **characterised in that** an allocation step for allocating data traffic to billing groups is carried out depending on the application to which the data traffic is allocated, wherein an identifier of the application and/or the transmission medium of the data traffic is sent as part of an interrogation signal for establishing a communications link and in the allocation step a comparison of a received identifier of the application and/or a received transmission medium of the data traffic is carried out with entries in an allocation table, in which a billing group is allocated to an identifier of the application and a transmission medium or a combination of transmission media.

2. Method according to claim 1, **characterised in that** the identifier contains at least one data item that is independent of the transmission medium used for executing the application, which provides information as to the origin of the application.

3. Method according to one of claims 1 or 2, **characterised in that** the allocation is carried out taking account of the direction of transmission of the data traffic (MO/MT).

4. Method according to one of claims 1 to 3, **characterised in that** if allocation is not possible the data traffic is allocated to a predetermined billing group.

5. Method according to one of claims 1 to 4, **characterised in that** the allocation table is stored in a unit for administering charging guidelines (CRF).

6. Method according to one of claims 1 to 5, **characterised in that** the allocation results are sent to a component of the core network (GGSN).

7. Method according to one of claims 1 to 6, **characterised in that** the allocation is carried out taking account of the traffic categories.

8. System for billing IMS peer-to-peer applications and/or the related data traffic in a radio communication system which encompasses at least one access network and core network (CN) with a service network (IMS), the data traffic being transmitted via an access network associated with the core network (CN), **characterised in that** a unit allocated to a component (GGSN) of the core network for administering charging guidelines (CRF) comprises a comparison unit which using the information received about the application performs a comparison with stored data, the data received being transmitted as part of an interrogation signal for establishing a communications link and constituting a received identifier of the application and/or a received transmission medium of the data traffic and the stored data are entries in an allocation table, in which a billing group is allocated to an identifier of the application and a transmission medium of the data traffic or a combination of transmission media.

9. System according to claim 8, **characterised in that** the comparison unit is connected to a component (CSCF) of the service network (IMS) for transmitting the data relating to the application.

10. System according to one of claims 8 or 9, **characterised in that** the unit for administering charging guidelines (CRF, OCS) is connected to the component (GGSN) of the access network for transmitting the results of a comparison.

## Revendications

1. Procédé de facturation d'applications Peer-to-Peer et/ou du trafic de données afférant dans un système de radiocommunication, comportant un réseau d'accès et un réseau central (CN) avec un réseau de services (IMS), sachant que le trafic de données est transmis par le biais d'un réseau d'accès affecté au réseau central (CN), **caractérisé en ce qu'**une étape d'affectation pour l'affectation de trafic de données à des groupes de facturation est effectuée en fonction de l'application à laquelle est affectée le trafic de données, sachant qu'un identifiant de l'application et/ou le moyen de transmission du trafic de données est délivré en tant qu'élément partiel d'un signal de demande pour l'établissement d'une connexion de communication et que dans l'étape d'affectation, une comparaison d'un identifiant de l'application et/ou d'un moyen de transmission du trafic de données reçu avec le contenu d'un tableau d'affectation est effectuée, dans lequel un groupe de facturations est affecté à un identifiant de l'application et d'un moyen de transmission ou d'une combinaison de moyens de transmission.

2. Procédé selon la revendication 1, **caractérisé en ce que** l'identifiant contient au moins l'une des informations indépendante du moyen de transmission utilisé pour l'exécution de l'application, laquelle donne des renseignements sur l'origine de l'application.

3. Procédé selon l'une des revendications 1 ou 2, **caractérisé en ce que** l'affectation se fait en tenant compte du sens de transmission du trafic de données (MO/MT).

4. Procédé selon l'une des revendications 1 à 3, **caractérisé en ce qu'**en cas d'absence de possibilité d'affectation, le trafic de données est affecté à un groupe de facturation prédéterminé.

5. Procédé selon l'une des revendications 1 à 4, **caractérisé en ce que** le tableau d'affectation est consigné dans une unité pour la gestion de directives de facturation (CRF).

6. Procédé selon l'une des revendications 1 à 5, **caractérisée en ce que** le résultat de l'affectation est transmis à un composant du réseau central (GGSN).

7. Procédé selon l'une des revendications 1 à 6, **caractérisée en ce que** l'affectation se fait en tenant compte des catégories de trafic.

8. Système de facturation d'applications Peer-to-Peer IMS et / ou d'un trafic de données afférent dans un système de radiocommunication comportant au moins un réseau d'accès et un réseau central (CN) avec un réseau de services (IMS), sachant que le trafic de données est transmis par un réseau d'accès affecté au réseau central (CN), **caractérisé en ce qu'**une unité pour la gestion de directives de facturation (CRF) affectée à un composant (GGSN), comporte une unité de comparaison qui à l'aide d'informations reçues effectue une comparaison par le biais de l'application avec des informations enregistrées, sachant que les informations reçues sont transmises comme partie d'un signal de demande pour l'établissement d'une connexion de communication et figure un identifiant de l'application reçu et / ou un moyen de transmission du trafic de données reçu et que les informations enregistrées sont des saisies d'un tableau d'affectation, dans lequel un groupe de facturations est affecté à un identifiant de l'application et un moyen de communication du trafic de données et une combinaison de moyens de transmission.

9. Système selon la revendication 8, **caractérisé en ce que** l'unité de comparaison est reliée à un composant (CSCF) du réseau de services (IMS) pour la transmission des informations par le biais de l'application.

10. Système selon l'une des revendications 8 à 9, **caractérisé en ce que** l'unité pour la gestion de directives de facturation (CRF, OCS) est reliée le composant (GGSN) du réseau d'accès pour la transmission d'un résultat de comparaison.
